# EUROPEAN PATENT SPECIFICATION

(11) **EP 1 201 388 B1**
(45) Date of publication and mention of the grant of the patent: **10.05.2006**
(21) Application number: 01308830.7
(22) Date of filing: 17.10.2001
(51) Int. Cl.: B29B 9/08, B29B 7/88, B29B 17/00, B29B 7/94, B29K 21/00

(54) **Method of manufacturing colored rubber chips**
Verfahren zur Herstellung von gefärbten Gummispänen
Méthode de fabrication de copeaux de caoutchouc colorés

(30) Priority: 24.10.2000 JP 2000323552; 11.01.2001 JP 2001003163
(43) Date of publication of application: 02.05.2002
(73) Proprietor: Murayama, Toshiya, Isehara-shi, Kanagawa (JP)
(72) Inventor: Murayama, Toshiya, Isehara-shi, Kanagawa (JP)
(74) Representative: Brookes Batchellor LLP

(56) References cited:
- JP-A- 58 054 102
- PATENT ABSTRACTS OF JAPAN vol. 1995, no. 08, 29 September 1995 (1995-09-29) -& JP 07 119284 A (KASAMA SHIYOUSAN KK), 9 May 1995 (1995-05-09)
- PATENT ABSTRACTS OF JAPAN vol. 017, no. 459 (M-1467), 23 August 1993 (1993-08-23) -& JP 05 106204 A (MIZUNO CORP), 27 April 1993 (1993-04-27)

## Description

### [Technical Field]

The present invention relates to a method of manufacturing colored rubber chips which can be suitably used as an elastic pavement material, and more particularly to a method of forming a flexible thick colored film on vulcanized rubber chips.

### [Background Art]

Conventionally known methods of manufacturing a colored elastic pavement material include a method of binding abandoned vulcanized rubber, which is crushed, with a poly urethane binder and applying a paint to the surface after curing, and a method of adding a pigment and an inorganic powder for coloring when crushued rubber chips are bound with a binder. But, the colored elastic pavement materials obtained by the above methods have disadvantages that they are poor in keeping their color because a black rubber chip base is exposed early due to abrasion of the paint in the former one and of the binder film in the latter one.

As means for solving the aforesaid disadvantages, JP-A-2-105 828 discloses a method of forming a colored film on vulcanized rubber chips with a polymer solution or emulsion and a pigment, but it has the following disadvantages.
(1) The polymer solution or emulsion is limited to 12 parts by weight or below (mostly, an actual solid content of 50% or below) with respect to 100 parts by weight of rubber chips so that the produced chips do not aggregate in manufacturing process . The colored film is very thin (about several tens of micrometers) and its elastic layer bound with the binder is quickly worn out, resulting in inferior color keeping.
(2) Where the polymer solution of an organic solvent is used, there is a danger and it is hazardous to the human body when the solvent vaporizes in a later drying process. When the emulsion is used, a drying process is essential, making the manufacturing operation complex and expensive. If a water content is poorly controlled, adhesion is poor when an elastic layer is produced by mixing with the binder later, so that durability is inferior.
(3) Adhesion of the emulsion to the vulcanized rubber chips is inherently poor, so that the coated colored film is easily peeled, and the elastic layer having the rubber chips cured with the binder has poor durability.

Japanese Patent Laid-Open Publication No. Hei 7-292238 discloses a method of forming a colored film on rubber chips using a water-based polyurethane resin and a pigment , but it has the following disadvantages.
(1) To produce coated rubber chips, the polyurethane emulsion cannot be used in a large amount in the same way as the aforesaid method in order to prevent aggregation. When the emulsion is used in a large amount to have a thick film, the rubber chips aggregate to form lumps, which cannot be separated into the rubber chips.
(2) A drying step is essential to evaporate a water content, making the operation is made complex and expensive, and if the water content is poorly controlled, adhesion is poor when an elastic layer is produced by mixing with a binder in the later step, so that durability is inferior.
(3) Adhesion of the film from the emulsion to the vulcanized rubber chips is inherently poor, so that the coated polymer film is easily peeled, and the elastic layer cured with the binder is poor in durability.

Meanwhile, a method of forming an elastic layer by coloring synthetic rubber such as EPDM, crushing the rubber into chips, and binding the chips with a binder is most commonly used as an elastic paving. But, it has disadvantages because it costs high, a recycled product is not used because virgin rubber is crushed, and the resource is not utilized effectively.

In view of the aforesaid disadvantages, it is an object of the present invention to provide a manufacturing method which can form a thick colored film without requiring a complex procedure and can inexpensively obtain colored rubber chips which have a remarkable color keeping property and a pyramid shape with edges similar to those formed when crushed.

### [Disclosure of the Invention]

In order to settle the aforesaid subjects, the inventor has made a devoted study, found amazingly that even if a polyurethane resin is used in such a large amount that vulcanized rubber chips aggregate in order to form a thick film, the aggregation can be loosened to independent particles by continuously stirring for mixing after the polyurethane resin starts to gel and the rubber chips start to aggregate in spite of heavy load on the mixer, and completed the present invention.

Specifically, the method of manufacturing colored rubber chips of the present invention is comprised of steps of adding a film forming material, which contains a pigment and at least 10 to 100 parts by weight of one-pack type or two-pack type polyurethane resin which gels from a liquid state in 60 seconds or more and cures through the gelling process, to 100 parts by weight of vulcanized rubber chips having a particle size of 1 to 10 mm or fibrous rubber chips having a fibrous length of 30 mm or below, stirring to mix them, and continuously stirring for mixing even after the polyurethane resin starts to gel and the rubber chips start to aggregate so to loosen the aggregation of the rubber chips.

### [Best Mode for Carrying Out the Invention]

The present invention will be described in detail below.

The method of manufacturing colored rubber chips of the present invention is comprised of steps of adding a film forming material, which contains a pigment and at least 10 to 100 parts by weight of one-pack type or two-pack type polyurethane resin which gels from a liquid state in 60 seconds or more and cures through the gelling process, to 100 parts by weight of vulcanized rubber chips having a particle size of 1 to 10 mm or fibrous rubber chips having a fibrous length of 30 mm or below, stirring to mix them, and continuously stirring for mixing even after the polyurethane resin starts to gel and the rubber chips start to aggregate so to loosen the aggregation of the rubber chips.

When the rubber chips and a film forming material containing the polyurethane resin, the pigment and other fillers are mixed by stirring, the mixture is in a flowable state at the beginning because it has a low viscosity, becomes difficult to flow because its viscosity increases with the progress of a reaction with moisture in air, gradually gels to have the resin in a jelled state, starts to aggregate as a whole and has a state to move or flow barely as a large mass in the mixer. And, when the mixing is further continued in spite of heavy load on the mixer, the mass is gradually separated into several medium-sized masses, adhension weaken subsequently to finally separate the masses into the rubber chips, and the rotation of the mixer is discontinued.

The rubber chips repeat aggregation and disaggregation to become individual chips in a short period of time, and the mixing is stopped. Therefore, the rubber chips have features that the film on their surface is relatively uniform, and they have a pyramid shape with edges similar to those formed when crushed to form the rubber chips.

Additional stirring is not desirable because the film coated on the edges of the chips is rubbed and scratched , and the uniformity of the film thickness is lost.

A crosslinking reaction proceeds to change the polyurethane resin from a liquid state to a final elastic substance, and a final cured state is obtained through the following process: a flowable liquid → the viscosity increases → a gelled state with flowability lost → a dry touch state → apparent curing → the elastic substance. When a pigment is added to the rubber chips and the polyurethane resin used as a film forming resin and they are continuously mixed, the viscosity is increased, gelation starts soon to make the resin jelled, and the whole mass starts aggregating. By continuously stirring the large aggregated mass, the jelly state changes gradually into a hard and brittle state with cohesion between the chips weakened, and the rubber chips with the surface coated with the resin start to separate from one another due to their own weights. Finally, each of all the chips becomes independent of one another.

In the process that the rubber chips are separated from one another, the rubber chip particles have the coated film unified or separated and become independent of one another at a certain point in time as the curing proceeds, then the rotation of the mixer is stopped immediately. Thus, it is considered that the film having a relatively uniform thickness can be obtained, and the chips having a pyramid shape are obtained.

A process that the coated film changes was checked by experiments. Specifically, 1 wt% of a curing acceleration catalyst ("DABCO33LV" manufactured by Air Products Co., Ltd., a tertiary amine catalyst) was added to a polyurethane resin ("Surfam F-9" manufactured by Yokohama Rubber, Co., Ltd., a fast-curing one-pack type moisture-curing type polyurethane prepolymer) in an environment of 25°C × 50% RH, theywere uniformly stirred, the prepared mixture was coated to a thickness of 0.8 mm on a stainless steel board, and a change of state with respect to time was observed. Results are shown in Table 1.

**[Table 1]**

| Step | Elapsed time | State |
|---|---|---|
| A | 0 min. | Mixing and coating completed. |
| B | 10 min. | Still flowable with self-leveling property. |
| C | 12 min. | Film formed on the surface, flowability lost, and gelation started. |
| D | 14 min. | Soft jelly state. |
| E | 17 min. | Somewhat firm jelly state. Surface had tack, but powder eliminated tack. |
| F | 19 min. | Surface was tack free and did not adhere to a polyethylene film. Deformed when pushed with a finger. |
| G | 22 min. | Surface was tack free and not deformed when pushed with a finger. |
| H | 25 min. | Not scratched when pushed with a spatula. |
| I | 32 min. | Steady film with physical properties began to appear. |
| J | 38 min. | Film with elasticity, elongation and strength. |

It is seen from Table 1 that the whole mass aggregates to form a large mass in step E, and when mixing is further continued, the mass changes to form small masses, and they are finally separated into individual rubber chips as the aggregation is loosened in step F. Therefore, a more uniform thick film is formed as the time from step F to step G is shorter. There is no adhesion among the individual rubber chips, and they do not aggregate again. But, as a precaution,sprinkling of a small amount of powder may be recommemnded to eliminate residual tack. The coated film becomes tough quickly, so that it is not scraped, removed or torn.

Addition of inorganic or organic powder when the polyurethane resin starts to gel and the rubber chips start to aggregate as described later was also considered. The addition of inorganic or organic powder at the beginning of gelation provides an advantage that the aggregation can be loosened earlier without adding a load to the mixer before the whole comes to have an aggregated state with very high cohesion.

It is seen from Table 1 that when the organic or inorganic powder is added between steps D and E, the powder is first kneaded into the polyurethane resin film but becomes hard to enter into the film when it becomes a firm gel state and remains dispersed on the surface. At this moment, the mass of rubber chips showing a tendency to aggregate is suddenly separated to pieces, adhesion between the individual rubber chips is lost completely, and they never aggregate again. The coated film becomes tough soon, so that it is not scraped, removed or torn. Even if the powder is used in an amount somewhat excessive and remains as a power without adhering, there is not any problem because it is kneaded together with the binder when the elastic paving layer is formed.

Addition of the powder in a step before step D cannot loosen the aggregation unless it is continuously added up until after step E, and it is not desirable because the powder is excessively incorporated into the film, and the film has a brittle physical property.

The vulcanized rubber chips used in the present invention are made from tires, belt conveyors, window frame gaskets or the like which are vulcanized natural rubber, SBR or BR, or polyurethane rubber or the like, physically crushed to have a particle size of from 1 to 10 mm at normal temperature or in a frozen state. Generally, crushued waste tires are used most often. Fibrous rubber chips (thin elongated rubber chips) having a fibrous length of 30 mm or below which are produced when tires are retreaded can also be used.

The one-pack or two-pack type polyurethane resin can be any type as long as it gels from a liquid state in 60 seconds or more and cures through the gelling process, and any liquid resin for binders which are conventionally used for rubber chip-based elastic pavement materials, polyurethane polymers and elastomers can be used.

Time before gelling is 60 seconds or more to allow the formation of the film, but if it is shorter than 60 seconds, a yield of loosening the aggregation becomes low, and productivity becomes poor. If the time that the polyurethane resin gels is excessively long, the unstable gelled intermediate state lasts long. Therefore, when the mixer is stopped after the mass of rubber chips is loosened to individual rubber chips, the rubber chips may aggregate again, and the processing time becomes long. And, the shape of the rubber chips after being coated may become somewhat poor. Therefore, an appropriate gelling time is preferably 60 minutes or below, and more preferably from 10 to 60 minutes. If the gelling time is out of the above range, it may be adjusted by heating, cooling, adjusting an amount of the catalyst, or adding water or the like.

The one-pack type polyurethane resin is for example a moisture curing type polyurethane polymer, which is a polyurethane prepolymer in a liquid state at room temperature and having an isocyanate group content of from 3 to 15%, obtained by reacting excessive isocyanate, such as toluene diisocyanate, diphenylmethane diisocyanate, polymethylene polyphenyl isocyanate or hexamethylene diisocyanate, or modified isocyanate, such as its modified urethane or modified carbodiimide, with polyol such as polypropylene glycol, polytetramethylene glycol or polybutadiene polyol.

To promote the reaction, tertiary amine such as trimethylamine, triethylamine or N-methyl morpholine, and organic metallic salt of lead or tin or the like are desirably used as a catalyst. And, among the diamines used as an isocyanate group curing agent, those which react relatively quickly, such as 4,4'-diaminodiphenyl methane, 1,3- and 1,4-phenylenediamine, 2,4- and 2,6-diamino toluene may be added.

As described later, when water is sprayed before gelling to promote the gelation, water reacts with the isocyanate group. Instead of such a reaction, a latent curing agent having an oxazolidine ring for example is previously added to the binder, and when water is sprayed, it reacts with water to open the oxazolidine ring, so that amine and an alcohol group react with an isocyanate group, thereby enabling to make gellation and curing.

As the two-pack type polyurethane resin, for example, a main agent is the aforesaid one-pack type polyurethane prepolymer, and as a curing agent, polyol such as polyetherpolyol, polybutadiene polyol or the like and the aforesaid diamines are used alone or as a mixture. To promote curing, an organic metal salt of lead or tin or the like is preferably used as a catalyst. But, as described later, when water is sprayed before gelling to promote gellation, it should be designed to use the curing agent in a small amount because the isocyanate group reacts partly.

The polyurethane resin is used in 10 to 100 parts by weight, preferably 20 to 40 parts by weight, with respect to 100 parts by weight of vulcanized rubber chips. For the rubber chips having a practical particle size of 1 to 3 mm, a coating thickness is required to be 0.1 mm or more, preferably about 0.2 to 0.3 mm, and if the rubber chips have a different particle size, they also have a different surface area. Therefore, it becomes necessary to consider an amount of the resin (when the particle size is large, the resin amount can be small, and when the particle size is small, the resin amount must be increased), and the aforesaid range is desirable to obtain a necessary film thickness.

When the aforesaid resin is used in an amount of less than 10 parts by weight, the film becomes thin, and if it is used as an elastic layer, it wears out relatively early. Thus, its color keeping performance becomes poor. When the resin amount exceeds 100 parts by weight, it is difficult to disaggregate and loosen the aggregated mass of the coated rubber chips, at the time when the coated rubber chips are manufactured, into individual rubber chips, and there remain partly unseparated chips, a yield worsens extremely, and it is hard to set manufacturing conditions. And, not all the resin becomes the film, the resin is scraped by the mixer blades, and the scraped pieces of coating resin adheres to the surface of rubber chips to degrade their shapes.

The pigment to be used is variable depending on a color, and for example, there are used an iron oxide for brick red, brown and yellow, chromium oxide or phthalocyanine-based organic pigment for green, carbon black for black, and titanium oxide for white. Other pigments can be combined to prepare various colors.

The film forming material of the present invention may contain another compounding agent as required.

For example, for further improvement of a weathering resistance, an ozone resistance, a water resistance and a heat resistance, anti-aging agents such as ultraviolet absorbing agents, e.g., phenol-based ones such as IRGANOX 1010 (manufactured by Ciba-Geigy) and YOSHINOX BHT (manufactured by Yoshitomi Pharmaceutical Industries, Ltd.), benzotriazole-based one such as TINUVIN P-327, and benzophenone-based one such as TOMISORB 800 can be added.

According to the usage, anti-fungus, mildewproofing agent such as zinc pyrithione or zinc 2-pyridinethiol-1 oxide can be added after previously dispersing into an appropriate plasticizer, to inhibit the generation of bacteria and mold.

Besides, when tougher physical properties are required depending on the usage, the surface of the rubber chips can be treated by a surface treating agent such as a solution of polybutadiene containing OH groups, a solution of isoprene containing OH groups or a solution of polypropylene glycol of oxy-carboxylic acid before the polyurethane resin is added to the rubber chips.

In the present invention, the step of loosening the aggregation, namely a step that the film forming material is added and stirred for mixing and the stirring for mixing is continued after the polyurethane resin starts to gel and the rubber chips start to aggregate, is preferably performed a plurality of times. By increasing a frequency of the coating process, namely by applying a thin film several times, it becomes possible to form the film having a more uniform thickness.

And, it is desirable that when the aggregation is loosened, inorganic or organic powder is added to prevent the adhesion of the separated rubber chips, so that they do not aggregate again even if the stirring for mixing is stopped.

The inorganic or organic powder may be added when the rubber chips start to aggregate after the polyurethane resin has started to gel, namely, at a relatively early point (a moment when cohesive mass is started to be formed) when the cohesion increases with the progress of the reaction and the rubber chips start to aggregate into mass involving the gradual gelation from a certain moment. When the organic or inorganic powder is started to be charged and continuously charged little by little, the rubber particles which are aggregating are suddenly separated into individual particles momentarily within several tens of seconds.

In this case , a stirring efficiency and a stirring speed of the mixer must be examined deliberately depending on the volume of production at a time. Otherwise, it is hard to loosen the aggregation, and there is a possibility that the yield drops. And then, the coating film on the edges of the rubber chips also becomes thin, so that the rubber chips might have a rounded shape.

The organic or inorganic powder is not so effective to reinforce the physical properties . It is mainly used to prevent the cohesion and to loosen the aggregation of the rubber chips. Therefore, it is desired to be inexpensive as low as possible, and the organic or inorganic powder ranging from ultrafine silica powder of 10 mµ to silica sand of 1 mm can be used. For example, rubber, plastic or other powder is used as the organic powder, and the inorganic powder includes for example powder of inorganic substances such as calcium carbonate, talc, silica, clay, china clay, which are generally used as a filler for rubber and plastic. The organic or inorganic powder desirably has a particle size of from 0.5 to 50 µm.

It is also desirable to spray water before the polyurethane resin gels. By spraying a small amount of water before gelling, the time elapsed before gelling and the time between gelling and apparent curing can be decreased extensively. Therefore, there is a less chance that the film formed to have a uniform thickness is dented or worn out as grains rub one another or the film comes into contact with the mixer blades during a little time of stirring after loosening the aggregation of rubber chips . Thus, a more uniform film is obtained.

Water to be sprayed is sufficient in a small amount to promote gelling of the polyurethane resin. Specifically, it is sufficient in about 30 to 40% of an equivalent weight and, if the amount is excessive, it is not desirable because it is necessary to have a drying step in order to remove excessive moisture ,and foam produced in the film. Therefore, when a prepolymer has an NCO content of 10%, an appropriate amount of the water content is in a range of from 7g to 9g for 1 kg of the prepolymer. It is desirable that the mist has water droplets as small as possible so that their contact areas with the polyurethane resin become large.

Besides, it is desirable to contain granular materials having a particle size of from 0.2 to 0.8 mm into the film forming material. The granular materials are disposed in the film formed on the rubber chip surfaces, so that there is a less chance that the formed film is dented or deformed as it is rubbed or comes into contact with the mixer blades during a little time of stirring after the aggregation is loosened. Thus, a film having a more uniform thickness is obtained.

Because the granular materials are added to make the film have a uniform thickness, either the organic or inorganic granular materials may be used as long as they do not have any problem on terms of a water content, heat, adhesion and durability. Specifically, the organic granular materials are powder of rubber or plastic, the inorganic granular materials are silica sand, calcium carbonate, silica powder or powder of another incinerated material. And, hollow balloons such as Shirasu-balloons, phyllite, glass balloons and the like can also be used.

The particle size is desired to have almost the same size as the thickness of the film, and if it is excessively larger or smaller than that size, it does not meet the objective. The film thickness in the present invention is about 0.8 mm Max. and the particle size is also about the same accordingly. If the particle size is excessively small, the film thickness becomes variable, and if it is excessively large, the particles protrude from the outer surface of the film. Small projections are allowable but large projections are not desirable because the adhesion areas of the rubber chips are decreased to adversely affect on the physical properties of the elastic layer.

The mixer usable in the present invention is desired to have a scraper for scraping the adhered material from the stirring blades and the vessel wall and bottom. The stirring blades are desired to rotate at a low speed so that they do not scrape or peel the film which has not fully cured on the rubber chip surfaces .

It is desirable that the top of the mixing vessel is open so that the gelling state can be checked visually, water can be sprayed into it and the organic or inorganic powder can be charged therein. The material viscosity and gelling may be checked visually without employing a quantitative measuring method. For example, if they can be measured according to a change in electric current or by a torque meter or the like, a closed mixer can be used. And, it is preferable that the vessel can be warmed by passing steam or hot water around it so to adjust the curing time (gelling time).

### [Examples]

The present invention will be described in further detail with reference to examples. It is to be noted that the term "parts" in the examples means "parts by weight".
Used materials:
- Rubber chips:: "Rubber Chip 800H" manufactured by Misawa Toyo Co., Ltd., vulcanized rubber chips of waste tires crushed, a particle size of 1 to 3 mm.
- Polyurethane resin:: "Surfam F-9" manufactured by Yokohama Rubber Co., Ltd., fast-curing one-pack type moisture-curing polyurethane prepolymer.
- Curing acceleration catalyst:: "DABCO33LV" manufactured by Air Products Co., Ltd., a tertiary amine catalyst.
- Pigment:: Colcothar (red oxide) manufactured by Toda Kogyo Corporation, an iron oxide red pigment.
- Polyurethane binder:: "SBU Binder 0621S" manufactured by Sumitomo Bayer Urethane Co., Ltd, a one-pack type moisture-curing rubber chip binder.
- Inorganic powder:: Calcium carbonate powder manufactured by Maruo Calcium Co., Ltd., light-duty calcium carbonate, a particle size of 0.5µm.
- Inorganic hollow balloons:: "Silax PB-09L" manufactured by Shirakkusu-u Co., Ltd., Shirasu-balloons, a particle size of from 50 to 300/µm.
- Polyurethane emulsion:: "Super Flex 750" manufactured by Dai-ichi Kogyo Seiyaku Co., Ltd., anion based, a solid content of 40%.
- Colored synthetic rubber chip:: "Color Chip 3010-R2" manufactured by Misawa Toyo Co. , Ltd., EPDM rubber-based colored rubber.

### <Example 1>

One hundred parts of rubber chips were put in a mixing vessel, and 30 parts of a polyurethane resin with 1.5% of a catalyst premixed with it and 6 parts of a pigment were charged into the vessel while rotating mixing blades. After a lapse of about 13 minutes at normal temperature, the viscosity of the polyurethane resin was increased gradually to start gelling so to make the mixture aggregate as a whole. Mixing was still continued in spite of heavy load on the mixer, so that the aggregated mass was started to disaggregate to become small masses, and the aggregated mass of particles were finally separated into individual particles after a lapse of 18 minutes. The particles were still sticky slightly, and there was apprehension that the chips at a lower part of the vessel might aggregate to some extent due to their weights when the mixing was stopped, so that one part of calcium carbonate powder was added to prevent adhesion, and mixing was stopped.

The rubber chips were thoroughly separated into individual chips, and there were easily obtained colored and coated rubber chips having a pyramid shape and edges similar to the shape obtained when crushed.

### <Example 2>

### 1) First coating step

One hundred parts of rubber chips were put in a mixing vessel, and 15 parts of a polyurethane resin with 1.5% of a catalyst premixed with it and 3 parts of a pigment were charged into the vessel while rotating mixing blades. After a lapse of about 13 minutes at normal temperature, the viscosity of the polyurethane resin was increased gradually to start gelling so to make the mixture aggregate. Mixing was still continued, so that the aggregated mass was started to become small masses, and the aggregated particles were finally separated into individual particles after a lapse of 18 minutes . The particles were still sticky slightly, so that one part of calcium carbonate powder was added to prevent adhesion, and mixing was stopped. The mixture was left standing for 20 minutes.

### 2) Second coating step

While stirring the aforesaid material again, 15 parts of a polyurethane resin with 1.5% of a catalyst premixed with it and 3 parts of a pigment were charged into the vessel. After a lapse of about 13 minutes at normal temperature, the viscosity of the polyurethane resin was increased gradually to start gelling so to make the mixture aggregate as a whole. Mixing was still continued, so that the aggregated mass was started to loosen to become small masses, and the aggregated particles were finally separated into individual particles after a lapse of 18 minutes. The particles were still sticky slightly, so that one part of calcium carbonate powder was added to prevent adhesion, and mixing was stopped.

The rubber chips were thoroughly separated into individual chips, and there were easily obtained colored and coated rubber chips having a pyramid shape and edges similar to the shape obtained when crushed. The obtained rubber chips had almost the same appearance as those obtained in Example 1.

### <Example 3>

One hundred parts of rubber chips were put in a mixing vessel, and 30 parts of a polyurethane resin with 4.5% of a catalyst premixed with it, 6 parts of a pigment and 10 parts of hollow balloons were charged into the vessel while rotating mixing blades. After a lapse of about 120 seconds at normal temperature, the viscosity of the polyurethane resin was increased gradually to start gelling, and the mixture aggregated quickly as a whole. Mixing was still continued, so that the aggregated mass was started to become small masses after a lapse of 4 minutes, and the aggregated particles were finally separated into individual particles. The particles were still sticky slightly but considerably lower than in Example 1, so that mixing was stopped without adding calcium carbonate powder.

After coating, the colored and coated rubber chips had a shape similar to a pyramid but their edges were coated somewhat thin and rounded because the hollow balloons which were granular materials were contained in the coated film. These rubber chips could be obtained as individual chips separately with ease.

### <Example 4>

One hundred parts of rubber chips were put in a mixing vessel, and 80 parts of a polyurethane resin with 1.5% of a catalyst premixed with it and 6 parts of a pigment were charged into the vessel while rotating mixing blades. After a lapse of about 16 minutes at normal temperature, the viscosity of the polyurethane resin was increased gradually to start gelling so to make the entire mass to be an aggregatedmass with high cohesive stage. Mixing was still continued, so that the aggregated mass was started to be loosened to become small masses. Though the small masses had a remaining tendency but the small aggregated particles were finally separated into individual particles after a lapse of 30 minutes . The particles were still sticky slightly, so that 2 parts of calcium carbonate powder was added to prevent adhesion, and mixing was stopped.

The rubber chips were thoroughly separated into individual chips having an appearance similar to a pyramid but their edges were slightly rounded because the mixing at the final stage took a long time.

### <Example 5>

One hundred parts of rubber chips were put in a mixing vessel, and 30 parts of a polyurethane resin with 0.5% of a catalyst premixed with it and 6 parts of a pigment were charged into the vessel while rotating mixing blades. After a lapse of about 120 minutes at normal temperature, the viscosity of the polyurethane resin was increased gradually to start gelling though a point of change was obscure, and the entire mass was aggregated slowly, but mixing was still continued. After a lapse of three hours, the periphery of the mixer vessel was warmed to promote gelling. The obtained coated chips had a good pyramid shape with the film having an appropriate thickness on the edges .

### <Comparative Example 1>

One hundred parts of rubber chips were put in a mixing vessel, and 120 parts of a polyurethane resin with 1.5% of a catalyst premixed with it and 6 parts of a pigment were charged into the vessel while rotating mixing blades. After a lapse of about 22 minutes at normal temperature, the viscosity of the polyurethane resin was increased gradually to start gelling so to make the entire mass to aggregate, but mixing was still continued. The entire mass had such a high cohesive condition that the mass did not loosen easily. Stirring was continued but gelling proceeded, and a heavy load was applied to the mixer to make it hard to rotate. After a lapse of 35 minutes, 20 parts of calcium carbonate powder was added, and the mass could be somewhat loosened to individual rubber chips, but about 20% of the mass could not be loosened into rubber chips. At this time, the film of the polyurethane resin was scraped to produce lots of small pieces of broken film resin, which were embedded into the film surface. Thus, the surface became defective because it was fluffy and did not have a smooth shape. The film thickness was small though the resin was used in a large amount. Even if the resin was used in a large amount, the aggregation could be loosened though the formed shape was not taken into consideration.

### <Comparative Example 2>

One hundred parts of rubber chips were put in a mixing vessel, and 30 parts of a polyurethane resin with 6% of a catalyst premixed with it, 6 parts of a pigment and 20 parts of calcium carbonate powder were charged into the vessel while rotating mixing blades. After a lapse of about 40 seconds at normal temperature, the viscosity of the polyurethane resin was increased gradually to start gelling, and the mixture was aggregated quickly. Mixing was still continued, so that the aggregated mass started to loosen to become small masses after a lapse of 120 seconds. But about 1/3 of the aggregated mass remained after a lapse of 5 minutes was not separated into particles, and sphere shaped aggregates remained when curing was completed. Thus, the mass could not be loosened completely.

### <Comparative Example 3>

One hundred parts of rubber chips were put in a mixing vessel, and 12 parts of a polyurethane emulsion and 6 parts of a pigment were charged into the vessel while rotating mixing blades. After a lapse of 20 minutes at normal temperature, water was evaporated somewhat, the mixture had an increased viscosity to form a state similar to gelation. And, when the mixture started to form a large mass, 6 g of calcium carbonate powder was added little by little. The mass became small masses, the powder was attached to the surface of the coating resin in a relatively short time, and the aggregated chips were separated into individual chips.

Since the coated film was thin, the chips had the same sharp edges as those obtained when crushed, and there were obtained coated chips having a good appearance.

### (Evaluation method)

Characteristics of the rubber chips obtained by Examples 1 to 5 and Comparative Examples 1 to 3 were evaluated by the following methods. The results are shown in Table 2 and Table 3.

### (1) Coating thickness

Three relatively large particles were selected and magnified by 75 times by means of a micromeasure (manufactured by Micro Square Co.,Ltd.) for measurement. Five points were measured, and maximum and minimum values were used.

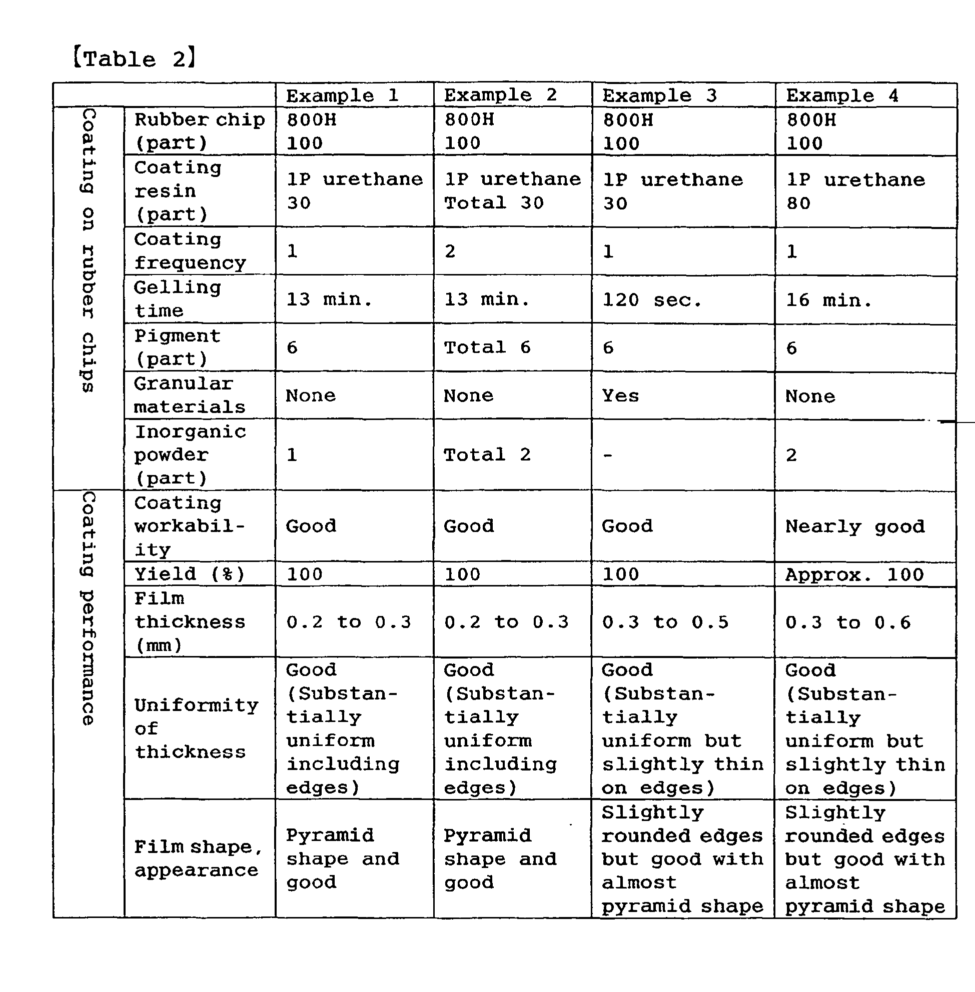

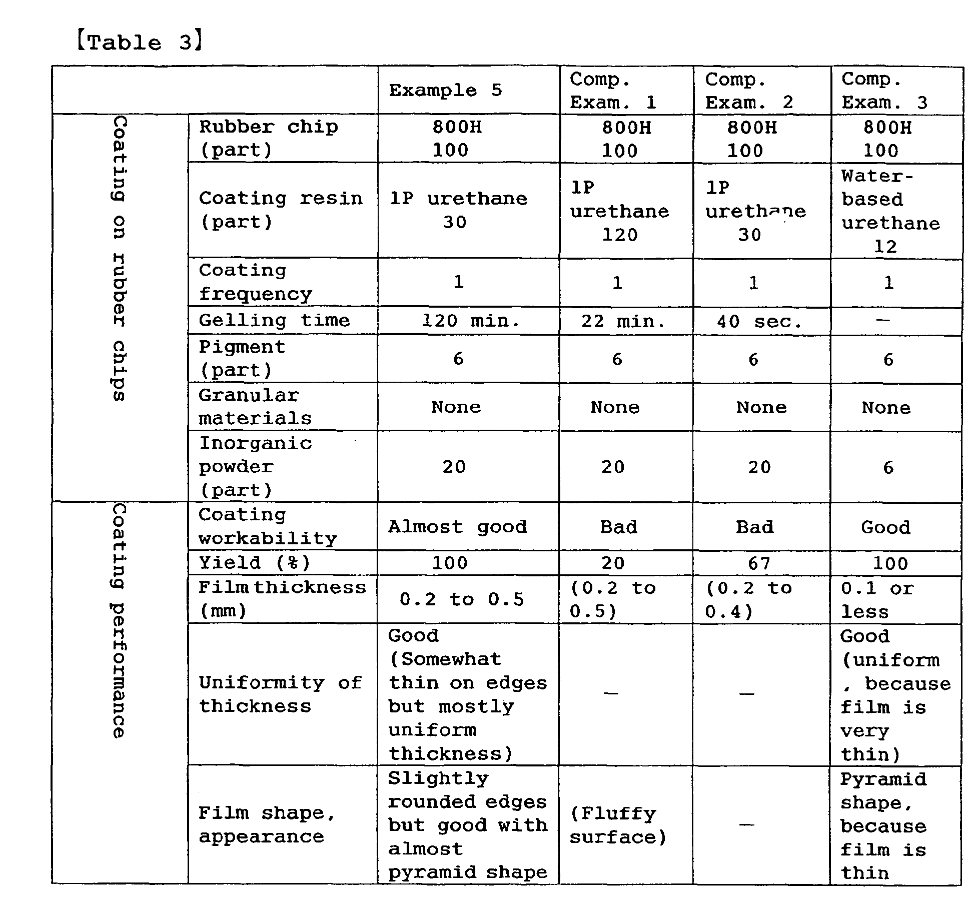

The following are apparent from Tables 2 and 3.

### 1) Coating workability and yield

"Good" means that the aggregation can be loosened efficiently with ease, the yield is good, and the coated chips can be produced with a yield of almost 100%. And, Examples 1 to 3 are applicable, and the production can be performed with ease even if the mixer has a somewhat poor mixing efficiency. Example 4 requires a little longer time to loosen the aggregation because the resin is used in a large amount, and there is not any problem. Example 5 does not have any problem except that the mixing time is very long. Comparative Example 1 has an excessive amount of the coating resin and Comparative Example 2 has a very short curing time, so that they are difficult to loosen the aggregation completely. It is seen that Comparative Example 3 can obtain the coated chips with ease, even if the emulsion is used, by adding powder before the complete drying while mixing.

### 2) Coating thickness, uniformity of thickness and appearance

There is not difference by the number of steps between Example 1 and Example 2, and they can produce the rubber chips having a good shape with edges and the same pyramid shape as obtained when crushed without largely varying the thickness even by a single step. Example 3 can keep the pyramid shape although the coated film has a large thickness because the hollow balloons are used but it is relatively thin on the edges, making them round. Examples 4 and 5 also have almost the same results.

### <Examples 6>

One hundred parts of the colored coated rubber chips prepared in Example 1 and 25 parts of a polyurethane binder were stirred by a mixer for rubber chips for about three minutes. The mixture was uniformly spread on a molding base and leveled to a thickness of 10 mm by a heat roller and a plasterer trowel, and left standing at 25°C × 50%RH for 10 days for curing and aging so to prepare a rubber chip layer (elastic layer).

### <Example 7>

An elastic layer was prepared by following the procedure of Example 6 except that the colored coated rubber chips prepared in Example 3 were used.

### <Example 8>

An elastic layer was prepared by following the procedure of Example 6 except that the colored coated rubber chips prepared in Example 4 were used.

### <Example 9>

An elastic layer was prepared by following the procedure of Example 6 except that the colored coated rubber chips prepared in Example 5 were used.

### <Comparative Example 4>

An elastic layer was prepared by following the procedure of Example 6 except that the colored coated rubber chips prepared in Comparative Example 3 were used.

### (Evaluation Method)

The rubber chip layers (elastic layers) of Examples 6 to 9 and Comparative Example 4 were evaluated for their properties according to the following procedures, and the results are shown in Table 4.

### (1) Appearance

The following standards were used for evaluation.
○: good. Pyramid chips having the same shape as rubber is crushed are seen dispersed on the layer surface.
×: Bad. Rounded chips are seen dispersed on the layer surface.
Δ: Slightly bad. A state between the above ○ and ×.

### (2) Specific gravity

Measured according to JIS Z 8807 (sample weight/volume).

### (3) Tensile strength, elongation

Measured according to JIS K 6301. And, states at brake were observed.

### (4) Abrasion resistance

The layer surface was abraded by applying a loading weight of 1 KG and rotating an abradingtruck wheel CS-17, 1000 time rotation by Taber abrasion tester according to JIS K 7204. The abraded surface appearance was evaluated by the following standards.
○: Black sub-base is not visible at all.
Δ: Black sub-base is somewhat visible.
×: Black portions are considerably visible.

### (5) Weathering resistance

The surface appearance was evaluated by the following standards after exposure by a sunshine weatherometer for 1000 hours.
○: Black sub-base is not visible at all.
Δ: Black sub-base is somewhat visible.
×: Black potions are considerably visible.

**[Table 4]**

| | Exam. 6 | Exam. 7 | Exam. 8 | Exam. 9 | comp. Exam. 4 |
|---|---|---|---|---|---|
| Appearance | ○ | ○ | ○ | Δ to ○ | ○ |
| Specific gravity | 0.84 | 0.81 | 0.86 | 0.83 | 0.77 |
| Tensile strength (kgf/cm²) | 14.7 | 13.2 | 14.3 | 14.1 | 5.2 |
| Elongation (%) | 88 | 76 | 93 | 85 | 52 |
| State at brake | Coating layer or binder material broken : Cohesive failure | Coating layer or binder material broken : Cohesive failure | Coating layer or binder material broken : Cohesive failure | Coating layer or binder material broken : Cohesive failure | Interface between coating layer and rubber chips separated :Adhesive failure |
| Abrasion resistance | ○ | ○ | ○ | ○ | × |
| Weathering resistance | ○ | ○ | ○ | ○ | Δ |

The following are apparent from Table 4.

### 1) Appearance

Examples 6 to 8 have a thick colored coating film. But, pyramid-shaped chips having the same shape as rubber is crushed are seen dispersed on the layer surface, indicating a good appearance. Example 9 has slightly rounded particles, indicating a slightly good appearance. And, Comparative Example 4 has a good appearance.

### 2) Tensile strength, elongation

Examples 6 to 9 have a high strength because adhesion between the coating film and the binder (adhesive) is high. As to the state at break, the colored coating layer or the binder material is broken, but the interface between the rubber chips and the coating layer is not separated. But, Example 7 has the hollow balloons with a large particle size in the layer, so that the tensile strength and the elongation are slightly low.

Comparative Example 4 has a water-based polyurethane film, so that its adhesion with the rubber chips is poor, the tensile strength is also poor, resulting in separation at the interface with the rubber chip surface.

### 3) Abrasion resistance

Examples 6 to 9 having the polyurethane film formed on the rubber chip surface have a good abrasion resistance. But, Comparative Example 4 having the water-based polyurethane film has a bad abrasion resistance because the film is thin.

### 4) Weathering resistance

Examples 6 to 9 having the polyurethane film formed on the rubber chip surface are good, but Comparative Example 4 having the water-based polyurethane film is bad because the film is thin.

### <Example 10>

### 1) Coating of colored film on rubber chips

One hundred parts of rubber chips were put in a mixing vessel, and 30 parts of a polyurethane resin with 1.5% of a catalyst premixed with it and 6 parts of a pigment were charged into the vessel while rotating mixing blades. After a lapse of about 13 minutes at normal temperature, the viscosity of the polyurethane resin was increased gradually to start gelling, and when the mixture started to aggregate, 30 parts of inorganic powder was added little by little. The inorganic powder was sprinkled around the rubber chips, so that the aggregated particles were suddenly separated into individual chips. The mixing was stopped after checking that the individual particles were separated into individual particles.

### 2) Preparation of rubber chip layer (Elastic layer)

One hundred parts of the above colored rubber chips and 25 parts of a polyurethane binder were mixed by a mixer for rubber chips for about three minutes . The mixture was uniformly spread on a molding base and leveled to a thickness of 10 mm by a heat roller and a plasterer trowel.

### <Example 11>

### 1) Coating of colored film on rubber chips

One hundred parts of rubber chips were put in a mixing vessel, and 30 parts of a polyurethane resin with 1.5% of a catalyst premixed with it and 6 parts of a pigment were charged into the vessel while rotating mixing blades. After a lapse of about 10 minutes at normal temperature, the viscosity of the polyurethane resin was increased slightly, and a very small amount of tap water was sprayed. The viscosity was sharply increased in 2 to 3 minutes to start gelling, and when the mixture started to aggregate, 20 parts of inorganic powder was added little by little. When the inorganic powder was attached around the rubber chips and the aggregated particles were suddenly separated into individual particles, the mixing was stopped after checking that the individual particles were separated.

### 2) Preparation of rubber chip layer (Elastic layer)

One hundred parts of the above colored rubber chips and 25 parts of a polyurethane binder were stirred by a mixer for rubber chips for about three minutes. The mixture was uniformly spread on a molding base and leveled to a thickness of 10 mm by a heat roller and a plasterer trowel.

### <Comparative Example 5>

### Preparation of rubber chip layer (Elastic layer)

One hundred parts of rubber chips, 25 parts of a polyurethane binder and 6 parts of a pigment were stirred by a mixer for rubber chips for about three minutes. The mixture was uniformly spread on a molding base and leveled to a thickness of 10 mm by a heat roller and a plasterer trowel.

### <Comparative Example 6>

### 1) Coating of colored film on rubber chips

One hundred parts of rubber chips were put in a mixing vessel, and 8 parts of a polyurethane resin with 1% of a catalyst premixed with it and 4 parts of a pigment were charged into the vessel while rotating mixing blades. After a lapse of about 13 minutes at normal temperature, the viscosity of the polyurethane resin was increased gradually to start gelling, and when the mixture started to aggregate, 15 parts of inorganic powder was added little by little. When the inorganic powder was attached around the rubber chips and the aggregated particles were suddenly separated into individual particles, the mixing was stopped after checking that the individual particles were separated.

### 2) Preparation of rubber chip layer (Elastic layer)

One hundred parts of the above colored rubber chips and 25 parts of a polyurethane binder were mixed by a mixer for rubber chips for about three minutes . The mixture was uniformly spread on a molding base and leveled to a thickness of 10 mm by a heat roller and a plasterer trowel.

### <Comparative Example 7>

### Preparation of rubber chip layer (Elastic layer)

One hundred parts of synthetic colored rubber chips and 25 parts of a polyurethane binder were stirred by a mixer for rubber chips for about three minutes . The mixture was uniformly spread on a molding base and leveled to a thickness of 10 mm by a heat roller and a plasterer trowel.

### (Evaluation method)

Properties were evaluated by the same evaluation methods used for the rubber chips and the rubber chip layers (elastic layers) of Examples 1 to 9 and Comparative Examples 1 to 4. The results are shown in Table 5 and Table 6.

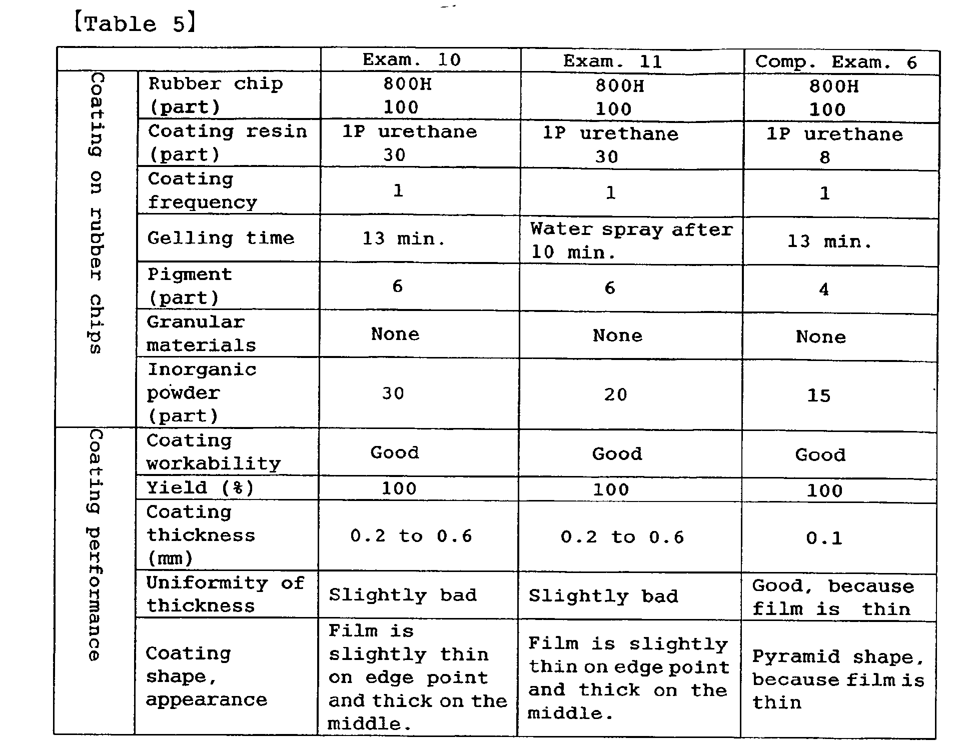

.

**[Table 6]**

| | Exam. 10 | Exam. 11 | Comp. Exam. 5 | Comp. Exam. 6 | Comp. Exam. 7 |
|---|---|---|---|---|---|
| Appearance | Δ to ○ | Δ to ○ | ○ | ○ | ○ |
| Specific gravity | 0.83 | 0.84 | 0.74 | 0.77 | 0.84 |
| Tensile strength (kgf/cm²) | 14.4 | 14.2 | 6.5 | 10.8 | 9.5 |
| Elongation (%) | 82 | 79 | 60 | 72 | 92 |
| State at brake | Coating layer or binder material broken : Cohesive failure | Coating layer or binder material broken : Cohesive failure | Interface between binder and rubber chips separated : Adhesive failure | Coating layer or binder material broken : Cohesive failure | Interface between binder and rubber chips separated :Adhesive failure |
| Abrasion resistance | ○ | ○ | × | Δ | ○ |
| Weathering resistance | ○ | ○ | × | Δ to ○ | ○ |

The following are apparent from Table 5.

### 1) Coating workability and yield

Examples 10, 11 and Comparative Example 6 were good and had a high yield.

### 2) Coating thickness, uniformity of thickness, appearance

In Examples 10 and 11, the film has a uniform thickness excepting on the edge points, but the film on the edge points is thinner as compared with that on the middle portion, so that the appearance is somewhat rounded. Comparative Example 6 uses the resin in a small amount, so that the film is very thin, and the chips have a pyramid shape.

The following are apparent from Table 6.

### 1) Appearance

Examples 10 and 11 are slightly good because the coated shape is somewhat rounded, and Comparative Examples 5 to 7 are good.

### 2) Tensile strength, elongation

Examples 10 and 11 have a high tensile strength because adhesion between the coating film and the rubber chips is high. And, for the state at break, the colored coating layer or the binder material is broken, and the interface between the rubber chips and the coating layer is not separated.

Comparative Example 5 has a low tensile strength because the adhesion between the rubber chips and the adhesive is not so strong.

### 3) Abrasion resistance

Examples 10 and 11 are remarkable, Comparative Example 5 is bad, Comparative Example 6 is bad because the film is thin, and Comparative Example 7 is good because the rubber chips are originally colored themselves,colored film is not coated.

### 4) Weathering resistance

Examples 10 and 11 are good because the coated film is thick, Comparative Example 5 is bad because a coating film is not used, and Comparative Example 6 is slightly bad because the coated film is thin.

### [Industrical Applicability]

As described above, the following effects can be obtained by the present invention.
1) The colored film having a uniform thickness of about 0.1 to 0.8 mm is obtained on the vulcanized rubber chips, and the film has the same elastic behavior as the rubber chips have. When these rubber chips are cured with the polyurethane binder and used as the elastic paving material, roadway pavements having durability in color keeping can be obtained.
2) The rubber chips are coated with a thick cured film of polyurethane rubber having good adhesion, and they are cured with the same type of polyurethane binder to form the elastic layer. The obtained elastic layer has tough physical properties durable against running and walking spike shoes used in athletic fields, golf courses, etc. and also durable against running vehicles on passageways in golf courses, pathways in parks and the like.
3) Where the aggregation is loosened, a loosening efficiency is very good even if a mixer having a somewhat poor mixing efficiency is used, so that the coated film having a uniform thickness can be obtained by few coating frequency of about one or so, and the obtained rubber chips have a pyramid shape with substantially the same edges as formed when crushed. The elastic layer obtained by curing these rubber chips with an adhesive has a good appearance similar to a conventional type of colored synthetic rubber chip pavement.
4) Since the coated film is thick, hardness of colored rubber chip can be changed freely by changing the hardness of the used polyurethane resin and the amounts of powder and granular materials added. Thus, the elastic layer having hardness suitable for purposes can be obtained.
5) The polyurethane resin used for coating has a solid content of 100% and does not contain an organic solvent. Therefore, it is safely processed without any problem even if heated and does not require a separate drying step because it does not contain water. Thus, the manufacturing process can be simplified and completed in a short time. Accordingly, a production cost is very low.
6) Produced granular colored chips are immediately packed into bags, and even if such bags are piled up in the shortest time of 20 minutes after packing and a load is applied on them, the coating layer is not deformed, and it is efficient for proceeding the process.
7) The present invention is an effective technology for recycling waste tires and other waste rubber, which is inexpensive compared with a technology utilizing virgin rubber of EPDM rubber.

## Claims

1. A method of manufacturing colored rubber chips, comprising steps of adding a film forming material, which contains a pigment and at least 10 to 100 parts by weight of one-pack type or two-pack type polyurethane resin which gels from a liquid state in 60 seconds or more and cures through the gelling process, to 100 parts by weight of vulcanized rubber chips having a particle size of 1 to 10 mm or fibrous rubber chips having a fibrous length of 30 mm or below, stirring to mix them, and continuously stirring for mixing even after the polyurethane resin starts to gel and the rubber chips start to aggregate so to loosen the aggregation of the rubber chips.

2. A method of manufacturing colored rubber chips according to claim 1, wherein the step that the film forming material is added and stirred for mixing and the stirring for mixing is continued after the polyurethane resin starts to gel and the rubber chips start to aggregate so to loosen the aggregation is performed a plurality of times.

3. A method of manufacturing colored rubber chips according to claim 1 or 2, wherein inorganic or organic powder is added when the aggregation is loosened.

4. A method of manufacturing colored rubber chips according to claim 1 or 2, wherein inorganic or organic powder is added when the polyurethane resin starts to gel and the rubber chips start to aggregate.

5. A method of manufacturing colored rubber chips according to any of claims 1 to 4, wherein water is sprayed before the gelling.

6. A method of manufacturing colored rubber chips according to any of claims 1 to 5, wherein the film forming material contains a granular material having a particle size of from 0.2 to 0.8 mm.

## Patentansprüche

1. Verfahren zur Herstellung von gefärbten Gummispänen, aufweisend die Schritte der Zugabe eines filmbildenden Materials, das aufweist ein Pigment und wenigstens 10 bis 100 Gewichtsteile eines 1-Pack-Typ- oder 2-Pack-Typ-Polyurethanharzes, das aus einem flüssigen Zustand in 60 Sekunden oder mehr geliert und durch den Gelierungsprozeß erhärtet, zu 100 Gewichtsteilen von vulkanisierten Gummispänen mit einer Partikelgröße von 1 bis 10 mm oder faserigen Gummispänen mit einer Faserlänge von 30 mm oder weniger, des Rührens, um diese zu mischen, und kontinulierlichen Rührens zum Mischen, sogar, nachdem das Polyurethanharz beginnt zu gelieren und die Gummispäne beginnen zu aggregieren, um so die Aggregation der Gummispäne aufzulockern.

2. Verfahren zur Herstellung gefärbter Gummispäne nach Anspruch 1, wobei der Schritt, daß das filmbildende Material dazugegeben und zum Mischen gerührt wird und das Rühren zum Mischen fortgesetzt wird, nachdem das Polyurethanharz beginnt zu gelieren und die Gummispäne beginnen zu aggregieren, um so die Aggregation aufzulockern, mehrere Male durchgeführt wird.

3. Verfahren zur Herstellung gefärbter Gummispäne nach Anspruch 1 oder 2, wobei anorganisches oder organisches Pulver dazugegeben wird, wenn die Aggregation sich lockert.

4. Verfahren zur Herstellung gefärbter Gummispäne nach Anspruch 1 oder 2, wobei anorganisches oder organisches Pulver dazugegeben wird, wenn das Polyurethanharz beginnt zu gelieren und die Gummispäne beginnen zu aggregieren.

5. Verfahren zur Herstellung gefärbter Gummispäne nach einem der Ansprüche 1 bis 4, wobei Wasser vor dem Gelieren ein-/aufgesprüht wird.

6. Verfahren zur Herstellung gefärbter Gummispäne nach einem der Ansprüche 1 bis 5, wobei das filmbildende Material ein granuläres Material beinhaltet mit einer Partikelgröße von 0,2 bis 0,8 mm.

## Revendications

1. Procédé de fabrication de copeaux de caoutchouc colorés, comprenant des stades d'addition d'une substance filmogène qui contient un pigment et au moins de 10 à 100 parties en poids d'une résine de polyuréthane de type monocomposant ou bicomposant, qui se prend en gel à partir d'un état liquide en 60 secondes ou en plus de 60 secondes et qui durcit dans le processus de gélification, à 100 parties en poids de copeaux de caoutchouc vulcanisés ayant une dimension de particule de 1 à 10 millimètres ou de copeaux de caoutchouc fibreux ayant une longueur de fibre de 30 millimètres ou inférieure à 30 millimètres, d'agitation pour les mélanger et d'agitation continue pour les mélanger même après que la résine de polyuréthane a commencé à se prendre en gel et que les copeaux de caoutchouc ont commencé à s'agréger de manière à défaire l'agrégation des copeaux de caoutchouc.

2. Procédé de fabrication de copeaux de caoutchouc colorés suivant la revendication 1, dans lequel le stade d'addition de la matière filmogène et d'agitation pour le mélange et d'agitation pour continuer le mélange après que la résine de polyuréthane a commencé à se prendre en gel et que les copeaux de caoutchouc ont commencé à s'agréger de manière à défaire l'agrégation est effectué plusieurs fois.

3. Procédé de fabrication de copeaux de caoutchouc colorés suivant la revendication 1 ou 2, dans lequel on ajoute une poudre minérale ou organique lorsque l'agrégation est défaite.

4. Procédé de fabrication de copeaux de caoutchouc colorés suivant la revendication 1 ou 2, dans lequel on ajoute une poudre minérale ou organique lorsque la résine de polyuréthane commence à se prendre en gel et lorsque les copeaux de caoutchouc commencent à s'agréger.

5. Procédé de fabrication de copeaux de caoutchouc colorés suivant l'une des revendications 1 à 4, dans lequel on projette de l'eau avant la gélification.

6. Procédé de fabrication de copeaux de caoutchouc colorés suivant l'une des revendications 1 à 5, dans lequel la substance filmogène contient une substance granulaire ayant une dimension de particule allant de 0,2 à 0,8 millimètres.
